# EUROPEAN PATENT APPLICATION

(11) **EP 4 404 353 A1**
(43) Date of publication of application: **24.07.2024**
(21) Application number: 22948216.1
(22) Date of filing: 27.06.2022
(51) Int. Cl.: H01M 50/271, H01M 50/258

(54) **BATTERY AND ELECTRIC APPARATUS**

(71) Applicant: Contemporary Amperex Technology Co., Limited, Ningde, Fujian 352100 (CN)
(72) Inventor: WANG, Peng, Ningde, Fujian 352100 (CN); SUN, Zhanyu, Ningde, Fujian 352100 (CN); CHEN, Xingdi, Ningde, Fujian 352100 (CN)
(74) Representative: von Tietzen und Hennig, Nikolaus
(86) International application number: PCT/CN2022/101406
(87) International publication number: WO 2024/000091

(57) **Abstract**

Embodiments of the present application provide a battery and a power consuming device. The battery includes a case and a battery cell. The case has a top and a bottom opposite to each other in a height direction of the case. The bottom is provided with an opening. The battery cell is arranged upside down in the case with an end cap facing the bottom, the end cap is provided with a pressure relief mechanism and electrode terminals, and the pressure relief mechanism and the electrode terminals are both arranged to face the bottom. According to the embodiments of the present application, the energy density and the safety of the battery can be improved.

## Description

### Technical Field

The present application relates to the technical field of batteries, and in particular to a battery and a power consuming device.

### Background Art

In recent years, the emergence of new energy vehicles has played a huge role in promoting social development and environmental protection. Traction batteries, which are rechargeable batteries, are the power source of new energy vehicles and are widely used in the field of new energy vehicles.

In some cases, the energy density of the battery is not high, resulting in waste of space, which in turn affects the performance of the power consuming device. Moreover, the existing battery has poor rigidity, cannot directly bear the load brought by other parts of the power consuming device, and is likely to cause safety accidents and affects the safety of the power consuming device.

### Summary of the Invention

Embodiments of the present application provide a battery and a power consuming device, which can improve the energy density and the safety of the battery.

In a first aspect, the embodiments of the present application provide a battery, including a case and a battery cell. The case has a top and a bottom opposite to each other in a height direction of the case. The bottom is provided with an opening. The battery cell is arranged upside down in the case with an end cap facing the bottom of the case, the end cap is provided with a pressure relief mechanism and electrode terminals, and the pressure relief mechanism and the electrode terminals are both arranged to face the bottom.

In above technical solution, the opening is provided at the bottom of the case, the battery cell is arranged in the case, and the end cap faces the bottom and is arranged upside down in case, so that the rigidity of the top of the battery can be enhanced; and the electrode terminals and the pressure relief mechanism are jointly arranged to face the bottom, so that the safety of the battery can be improved.

In some embodiments, the case includes a support plate and side plates, the support plate is arranged at the top, and the battery is fixedly connected to the support plate.

In the above technical solution, the support plate and the side plates make the interior of the case have a space for receiving the battery cell, and by fixing the battery cell to the top, the rigidity of the top of the battery is increased.

In some embodiments, the case further includes a cover body arranged at the opening, the side plates are connected to each other to form a frame structure, and the cover body is fixedly connected to the side plates, such that the cover body covers the opening.

In some embodiments, in the height direction, there is a first distance H1 between the end cap of the battery cell and the cover body, the first distance H1 satisfying 2 mm < H1 < 30 mm.

In the above technical solution, keeping the first distance H1 makes the battery have a suitable volume and a good discharge performance.

In some embodiments, a ratio H1/M of the first distance H1 to the weight M of a single battery cell satisfies 0.2 mm/Kg < H1/M < 50 mm/Kg.

In the above technical solution, the battery has a good energy density and a suitable structural strength.

In some embodiments, the battery further includes a protective assembly, wherein the protective assembly is arranged between the battery cell and the cover body to protect the pressure relief mechanism and the electrode terminals.

In some embodiments, the protective assembly includes a plurality of protective members distributed at intervals in a length direction of the case, a plurality of battery cells are provided, and the pressure relief mechanism and the electrode terminals of each of the battery cells are located between two adjacent protective members.

In the above technical solution, the protective assembly functions to protect the pressure relief mechanism and the electrode terminals.

In some embodiments, the plurality of protective members include edge protective members, first protective members and second protective members, wherein in the length direction, the edge protective members are arranged at two side edges of an array in which the plurality of battery cells are arranged, and the first protective members and the second protective members are alternately distributed between the two edge protective members.

In the above technical solution, the protective members are more adapted to the array distribution of the battery cells, so as to better support the battery cells.

In some embodiments, in a width direction of the case, the first protective members have an extension length greater than that of the second protective members.

In the above technical solution, the second protective members avoid a bus component.

In some embodiments, in the length direction, the first protective members and the second protective members each have a width greater than that of the edge protective members.

In above technical solution, this helps the interior of the battery to be subjected to even stress, and the overall structural strength of the battery is increased.

In some embodiments, the end cap includes a functional area and shoulders, wherein in the length direction, the shoulders are located on two sides of the functional area, the functional area is provided with the pressure relief mechanism and the electrode terminals, and the protective members are fixedly connected to the shoulders.

In the above technical solution, the battery cell is fixed to the protective members by means of the shoulders, so that the battery can have a more compact structure, preventing damage to the functional area due to stress, and prolonging the service life of the battery cell.

In some embodiments, in the length direction, a width D1 of the edge protective members, a width D2 of the first protective members, a width D3 of the second protective members, and a width D4 of the shoulders satisfy: 0.2D4 ≤ D1 ≤ D4, 0.5D4 ≤ D2 ≤ 2D4, and 0.5D4 ≤ D3 ≤ 2D4, to meet the support requirements of the battery cell.

In some embodiments, in the height direction, the protective members have an extension height greater than that of the electrode terminals.

In the above technical solution, the electrode terminals and the pressure relief mechanism are suspended between the adjacent protective members 41, so as to avoid contact with other components and affect the function.

In some embodiments, the battery further includes an insulating plate body arranged between the protective assembly and the cover body.

In some embodiments, the insulating plate body is fixedly connected to the cover body to increase the structural firmness of the battery.

In a second aspect, the embodiments of the present application provide a power consuming device, including a battery cell according to any one of the embodiments in the first aspect, the battery cell being configured to supply electric energy.

### Brief Description of the Drawings

In order to more clearly illustrate the technical solutions of the embodiments of the present application, the accompanying drawings required in the embodiments of the present application will be briefly described below. Obviously, the accompanying drawings described below are merely some embodiments of the present application, and for those of ordinary skill in the art, other accompanying drawings can be obtained from these accompanying drawings without making creative efforts.
FIG. 1 is a schematic structural view of a vehicle according to some embodiments of the present application;
FIG. 2 is a schematic structural view of a battery according to some embodiments of the present application in an assembled state;
FIG. 3 is a schematic exploded view of a battery according to some embodiments of the present application;
FIG. 4 is a schematic structural view of a cover body of a battery according to some embodiments of the present application;
FIG. 5 is a schematic cross-sectional view of the battery shown in FIG. 2;
FIG. 6 is a schematic structural view of a collision test device for performing a collision test on a battery according to some embodiments of the present application;
FIG. 7 is a schematic exploded view of a battery according to some other embodiments of the present application;
FIG. 8 is a schematic structural view of a protective assembly of a battery according to some other embodiments of the present application;
FIG. 9 is a schematic structural view of a battery cell of a battery according to some embodiments of the present application;
FIG. 10 is a schematic cross-sectional view of the battery shown in FIG. 7;
FIG. 11 is a schematic enlarged view of FIG. 10 at circle B; and
FIG. 12 is a schematic structural view of the interior of a battery cell according to some embodiments of the present application.

The reference signs in Detailed Description are as follows:
1000. Vehicle; 100. Battery; 200. Controller; 300. Motor; 1. Case; 101. Top; 102. Bottom; 103. Opening; 11. Support plate; 12. Side plate; 2. Battery cell; 201. Functional area; 202. Shoulder; 21. End cap; 211. Electrode terminal; 212. Pressure relief mechanism; 22. Housing; 23. Electrode assembly; 24. Bus component; 3. Cover body; 31. Main body portion; 32. Matching portion; 4. Protective assembly; 41. Protective member; 411. Edge protective member; 412. First protective member; 413. Second protective member; 42. Insulating plate body;
X. Length direction; Y. Width direction; Z. Height direction.

### Detailed Description of Embodiments

In order to make the objectives, technical solutions and advantages of embodiments of the present application clearer, the technical solutions in the embodiments of the present application will be described clearly below with reference to the accompanying drawings in the embodiments of the present application. Obviously, the embodiments described are some of, rather than all of, the embodiments of the present application. All other embodiments obtained by those of ordinary skill in the art based on the embodiments of the present application without any creative effort shall fall within the scope of protection of the present application.

Unless otherwise defined, all technical and scientific terms used in the present application have the same meanings as those commonly understood by those skilled in the art to which the present application belongs. The terms used in the description of the present application are merely for the purpose of describing specific embodiments, but are not intended to limit the present application. The terms "comprising" and "having" and any variations thereof in the description and the claims of the present application as well as the brief description of the accompanying drawings described above are intended to cover non-exclusive inclusion. The terms "first", "second", etc. in the description and the claims of the present application as well as the foregoing accompanying drawings are used to distinguish between different objects, rather than describing a specific order or a primary-secondary relationship.

In the present application, the phrase "embodiment" mentioned means that the specific features, structures and characteristics described in conjunction with the embodiments may be included in at least one embodiment of the present application. The phrase at various locations in the description does not necessarily refer to the same embodiment, or an independent or alternative embodiment exclusive of another embodiment.

In the description of the present application, it should be noted that, the terms "mount", "connected", "connect", or "attach" should be interpreted in a broad sense unless explicitly defined and limited otherwise. For example, they may be a fixed connection, a detachable connection, or an integral connection; or may be a direct connection, an indirect connection by means of an intermediate medium, or internal communication between two elements. For those of ordinary skill in the art, the specific meanings of the foregoing terms in the present application may be understood according to specific circumstances.

The term "and/or" in the present application is merely a description of the associated relationship of associated objects, representing that three relationships may exist, for example, A and/or B, may be expressed as: only A exists, both A and B exist, and only B exists. In addition, the character "/" in the present application generally indicates that the associated objects before and after the character are in a relationship of "or".

In the embodiments of the present application, the same reference numerals denote the same components, and for the sake of brevity, the detailed description of the same components is omitted in different embodiments. It should be understood that the dimensions, such as thickness, length and width, of the various components in the embodiments of the present application illustrated in the accompanying drawings, as well as the dimensions, such as an overall thickness, length and width, of an integrated device are merely illustrative and should not be construed to limit the present application in any way.

The phrase "plurality of" appearing in the present application means two or more (including two).

The term "parallel" in the present application includes not only the absolutely parallel situation, but also the roughly parallel situation that is generally recognized in engineering. Moreover, the term "perpendicular" not only includes the absolutely perpendicular situation, but also includes the roughly perpendicular situation that is generally recognized in engineering.

In the present application, the battery cell may include a lithium-ion secondary battery cell, a lithium-ion primary battery cell, a lithium-sulfur battery cell, a sodium-lithium-ion battery cell, a sodium-ion battery cell, a magnesium-ion battery cell, etc., which is not limited in the embodiments of the present application.

A battery in the present application refers to a single physical module including one or more battery cells to provide a higher voltage and capacity. For example, the battery mentioned in the present application may be a battery module, a battery pack, etc. The battery generally includes a case for packaging one or more battery cells. The case can prevent liquid or other foreign matter from affecting charging or discharging of the battery cell(s). In the battery, a plurality of battery cells may be connected in series, in parallel or in series-parallel. The series-parallel connection means that some of the plurality of battery cells are connected in series and some are connected in parallel. The plurality of battery cells may be directly connected to each other in series or in parallel or in series-parallel, and then the plurality of battery cells as a whole are received in the case. Of course, the battery may also be received in the case as a whole that is formed by firstly connecting a plurality of battery cells in series or in parallel or in series-parallel to form a plurality of batteries, and then connecting the plurality of batteries in series or in parallel or in series-parallel.

At present, from the perspective of the development of the market situation, traction batteries are used more and more widely. The traction batteries are not only used in energy storage power systems such as hydroelectric power plants, thermal power plants, wind power plants and solar power plants, but also widely used in electric transportation means such as electric bicycles, electric motorcycles, and electric vehicles and in many fields such as military equipment and aerospace. With the continuous expansion of the application field of traction batteries, market demand for the traction batteries is also expanding.

In the related art, the opening of the case of the battery usually faces upward in the vertical direction, the battery cell is fixed to the bottom of the battery, and electrode terminals face a cover body which covers the opening of the case.

However, in the battery configured as above, the applicant has noticed that when the battery is arranged in a power consuming device, the bottom is bonded to the power consuming device, and the battery cell is fixed to the bottom of the battery, so that the top of the battery that is more vulnerable to collisions has a poor rigidity, and when the battery is in a collision, the battery cell therein is subjected to uneven stress, so that the battery is likely to be damaged, resulting in poor safety of the battery and affecting the performance of the battery.

In view of this, the embodiments of the present application provide a battery, in which an opening is arranged at a bottom of a case, a battery cell is arranged in the case, and an end cap faces the bottom and is arranged upside down in case, so that the overall rigidity of the battery can be enhanced, reducing the probability of damage to the battery in a collision. Electrode terminals and a pressure relief mechanism are jointly arranged to face the bottom, so that the safety of the battery can be improved. Moreover, by adjusting a ratio of the distance between the motor terminals of the battery and a cover body to the weight of the battery cell, the overall structural strength of the battery can be adjusted while ensuring the energy density of the battery, and the performance of the battery can be further improved.

The technical solutions described in the embodiments of the present application are applicable to batteries and power consuming devices powered by the batteries.

The power consuming device may be a vehicle, a mobile phone, a portable apparatus, a notebook computer, a ship, a spacecraft, an electric toy, an electric tool, etc. The vehicle may be a fuel vehicle, a gas vehicle or a new energy vehicle. The new energy vehicle may be a battery electric vehicle, a hybrid vehicle, an extended range vehicle, etc. The spacecraft includes an airplane, a rocket, an aerospace plane, a spaceship, etc. The electric toy includes a stationary or mobile electric toy, such as a game machine, an electric toy car, an electric toy ship, and an electric toy airplane. The electric tool includes a metal cutting electric tool, a grinding electric tool, an assembling power tool, and a railway power tool, such as an electric drill, an electric grinder, an electric wrench, an electric screwdriver, an electric hammer, an electric impact drill, a concrete vibrator, and an electric planer. The foregoing power consuming devices are not specifically limited in the embodiments of the present application.

It should be understood that the technical solutions described in the embodiments of the present application are not merely applicable to the power consuming devices described above. However, for the sake of brevity, the following embodiments will be described by taking an electric vehicle 1000 as an example.

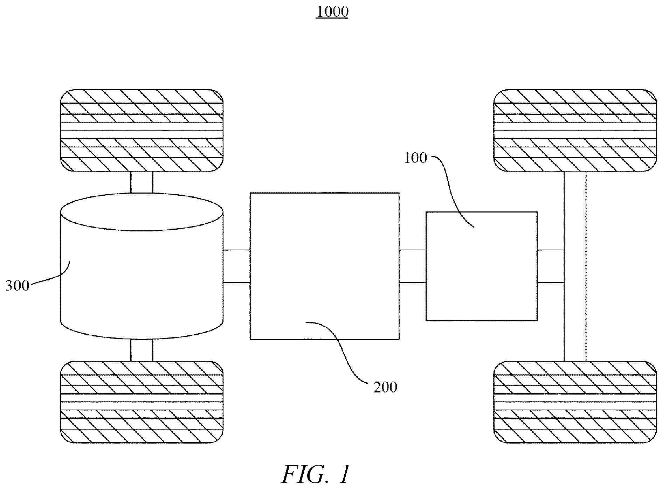

FIG. 1 is a schematic structural view of a vehicle 1000 provided in some embodiments of the present application. As shown in FIG. 1, the vehicle 1000 may be a fuel vehicle, a gas vehicle or a new energy vehicle, and the new energy vehicle may be a battery electric vehicle, a hybrid electric vehicle, an extended range vehicle, etc. A battery 100 is provided inside the vehicle 1000, and the battery 100 may be provided at the bottom, the front or the back of the vehicle 1000.

The battery 100 may be configured to supply power to the vehicle 1000. For example, the battery 100 may be used as a power supply for operating the vehicle 1000. The vehicle 1000 may further include a controller 200 and a motor 300. The controller 200 is configured to control the battery 100 to supply power to the motor 300, for example, to meet working power requirements during starting, navigation and traveling of the vehicle 1000. In some embodiments of the present application, the battery 100 not only may serve as an operating power source of the vehicle 1000, but also may serve as a driving power source of the vehicle 1000, thus replacing or partially replacing fuel or natural gas to provide driving power for the vehicle 1000.

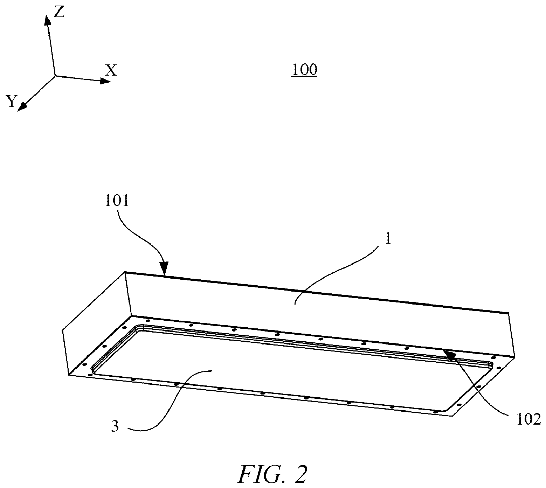

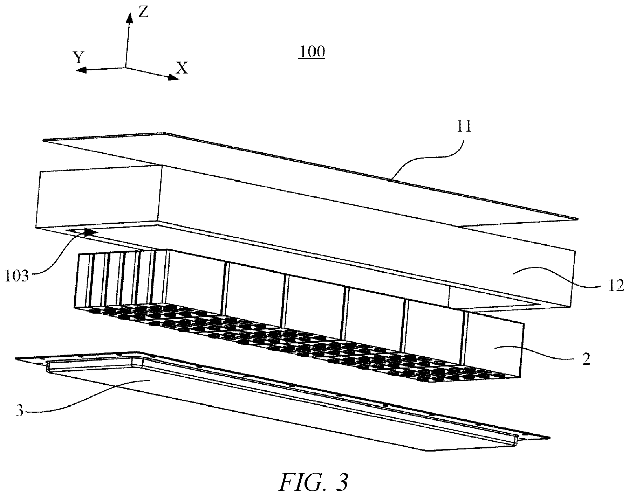

FIG. 2 is a schematic structural view of a battery 100 according to some embodiments of the present application in an assembled state. FIG. 3 is a schematic exploded view of a battery 100 according to some embodiments of the present application. As shown in FIGS. 2 and 3, in some embodiments of the present application, a battery 100 includes a case 1 and a battery cell 2. The case 1 has a top 101 and a bottom 102 opposite to each other in a height direction Z of the case 1. The bottom 102 is provided with an opening 103. The battery cell 2 is arranged upside down in the case 1 with an end cap 21 facing the bottom 102, the end cap 21 is provided with a pressure relief mechanism 212 and electrode terminals 211, and the pressure relief mechanism 212 and the electrode terminals 211 are both arranged to face the bottom 102.

By the case 1 having a top 101 and a bottom 102 opposite to each other in a height direction of the case 1, it is meant that the top 101 and the bottom 102 of the case 1 are arranged in sequence from top to bottom in the height direction. The opening 103 is provided at the bottom 102, that is, the case 1 faces downward in the height direction. For ease of description, in the embodiments of the present application, the height direction is taken as the Z direction, that is, the vertical direction. It should be understood that the height direction Z of the case 1 may also be along other directions, and other directions will be defined below in detail in order to indicate the arrangement direction of the battery cells 2 and other factors, and will not be further described here.

By the battery cell 2 being arranged upside down in the case 1 with an end cap 21 facing the bottom 102, it is meant that the battery cell 2 and the case 1 are arranged upside down with respect to each other in the height direction Z. Since the end cap 21 is provided with the pressure relief mechanism 212 and the electrode terminals 211, and the end cap 21 faces the bottom 102, the pressure relief mechanism 212 and the electrode terminals 211 also face the bottom 102 of the case 1.

The pressure relief mechanism 212 refers to an element or component that is actuated when an internal pressure of the battery cell 2 reaches a predetermined threshold so as to release the internal pressure. That is, when the internal pressure of the battery cell 2 reaches a predetermined threshold, the pressure relief mechanism 212 generates an action or is activated into a certain state, such that the internal pressure of the battery cell 2 can be released. The action generated by the pressure relief mechanism 212 may include, but not limited to, at least a part of the pressure relief mechanism 212 being fractured, broken, torn or opened, so as to form an opening 103, a channel or the like for releasing the internal pressure. In this case, high-temperature and high-pressure substances inside the battery cell 2 are discharged outwards from an actuated position as emissions. In this way, the pressure in the battery cell 2 can be released at a controllable pressure, thereby avoiding potential, more serious accidents. The pressure relief mechanism 212 may take the form of an explosion-proof valve, a gas valve, a pressure relief valve, a safety valve or the like, and may specifically use a pressure sensitive element or structure.

By arranging the battery cell 2 and the case 1 upside down with respect to each other, the battery cell 2 can be arranged at the top 101 of the battery 100, thereby increasing the rigidity of the top 101 of the battery 100 and increasing the safety of the battery 100. Moreover, the end cap 21 of the battery cell 2 faces the bottom 102 of the battery 100, so that it is possible to increase the energy density of the battery 100 and improve the usability of the battery 100. The arrangement of the electrode terminals 211 facing the bottom 102 can provide a large electrical connection space for the electrode terminals 211. The arrangement of the pressure relief mechanism 212 facing the bottom 102 can make a pressure relief direction of the pressure relief mechanism 212 directed toward the bottom 102 of the battery 100, thereby preventing the pressure relief mechanism 212 from exhausting to other external devices connected to the top 101 of the battery 100 and improving the safety of the battery 100.

In some embodiments of the present application, the case 1 includes a support plate 11 and side plates 12, the support plate 11 is arranged at the top 101, and the battery 100 is fixedly connected to the support plate 11.

The support plate 11, which is arranged at the top 101, and the side plates 12 are arranged in sequence from top to bottom in the height direction Z. The support plate 11 is a plate body that extends in a horizontal direction, and is configured to increase the rigidity of the top 101 of the battery 100, and the side plates 12 are plate bodies that extend in the height direction Z. The side plates 12 are arranged around the support plate 11, and the opening 103 is formed at the bottom 102, so that the interior of the case 1 has a space for receiving the battery cell 2. The battery cell 2 is fixedly connected to the support plate 11, so that it is possible to increase the rigidity of the top 101 of the battery 100 and reduce the possibility of damage to the battery 100 in a collision.

Optionally, the battery cell 2 may be directly connected to the support plate 11 by gluing, or may be fixedly connected to the support plate by other means.

Optionally, the side plates 12 may be integrally formed with the support plate 11, or may be fixedly connected to the support plate 11 by welding, bonding, fastening, flow drill screwing processes or other connection means, which will not be limited in the present application.

In an optional implementation, a cooling channel (not shown in the figures) is buried inside the support plate 11. Since the battery cell 2 is arranged at the support plate 11, and the bottom 102 of the battery cell 2 is in contact with the support plate 11, for the consideration of the performance of the battery 100, a channel is buried inside the support plate 11, and a gas or liquid as a heat medium passes through the channel, so that it is possible to have a battery 100 temperature regulation effect on the battery 100 during operating of the battery 100, thereby prolonging the service life and improving the usability of the battery 100.

In a further optional implementation, a channel may be provided between the battery cell 2 and the support plate 11 as a thermal management component, or be formed as any other component that can be configured to provide a temperature regulation function for the battery 100, which will not be limited in the embodiments of the present application here.

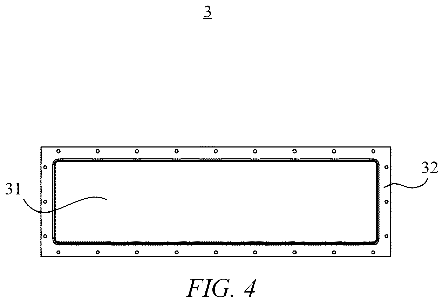

FIG. 4 is a schematic structural view of a cover body 3 of a battery 100 according to some embodiments of the present application. As shown in FIG. 4, in some embodiments of the present application, the case 1 further includes a cover body 3 arranged at the opening 103, the side plates 12 are connected to each other to form a frame structure, and the cover body 3 is fixedly connected to the side plates 12.

The side plates 12 are connected to each other to form a frame structure, that is, the side plates 12 are arranged in a circumferential direction of the support plate 11 and are combined with the support plate 11 to form the case 1 for receiving the battery cell 2. The cover body 3 is fixedly connected to the side plates 12 to cover the opening 103, so that the case 1 has a relatively sealed structure.

The cover body 3 includes a main body portion 31 and a matching portion 32. The matching portion 32 is arranged in a circumferential direction of the main body portion 31 and matches the side plates 12. That is, the main body portion 31 covers the opening 103 formed by the side plates 12, and the matching portion 32 is fixed to the side plates 12 to fixedly connect the cover body 3 to the side plates 12. Optionally, the matching portion 32 may be bolted to the side plate 12, or the matching portion 32 may be fixedly connected to the side plates 12 in other ways.

In the height direction Z, the main body portion 31 protrudes from an extension plane of the bottom 102 relative to the matching portion 32. There is a relatively larger distance between the battery cell 2 arranged inside the case 1 and the cover body 3. It should be understood that the protruding distance of the main body portion 31 relative to the matching portion 32 should be selected based on the energy density of the battery 100, and should not be too large to increase the volume of the battery 100 while reducing the energy density of the battery 100.

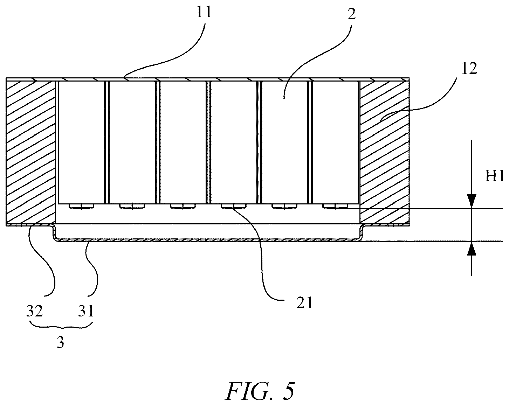

FIG. 5 is a schematic cross-sectional view of the battery 100 shown in FIG. 2. As shown in FIG. 5, in some embodiments of the present application, there is a first distance H1 between the end cap 21 of the battery cell 2 and the cover body 3, the first distance H1 satisfying 2 mm < H1 < 30 mm.

Where the main body portion 31 of the cover body 3 protrudes from the extension plane of the bottom 102 relative to the matching portion 32, the first distance H1 indicates a distance from the face of the battery cell 2 having the electrode ends and the explosion-proof valve to the main body portion 31 in the height direction Z. The first distance H1 satisfies 2 mm < H1 < 30 mm. Preferably, the first distance H1 satisfies 5 mm ≤ H1 ≤ 20 mm. Within this value range, the battery 100 can be guaranteed to have a suitable volume, so that the battery 100 has a good discharge performance.

In some embodiments of the present application, a ratio of the first distance H1 to the weight M of a single battery cell 2 satisfies 0.2 mm/Kg < H1/M < 50 mm/Kg.

The ratio H1/M of the first distance H1 to the weight M of a single battery cell 2 can indicate the energy density and the structural strength of the battery 100. When the ratio of the first distance H1 to the weight M of a single battery cell 2 is too large, the energy density of the battery 100 will be too low accordingly. When the ratio of the first distance H1 to the weight M of a single battery cell 2 is too small, the structural strength of the battery 100 will be insufficient accordingly, and a safety accident may occur in a collision. Therefore, H1/M satisfies 0.2 mm/Kg < H1/M < 50 mm/Kg. Preferably, H1/M satisfies 0.5 mm/Kg ≤ H/M ≤ 20 mm/Kg. Within this value range, the battery 100 has a good energy density and an appropriate structural strength.

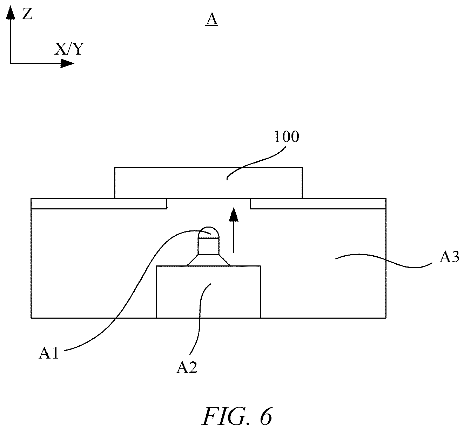

FIG. 6 is a schematic structural view of a collision test device A for performing a collision test on a battery 100 according to some embodiments of the present application. To verify that a battery 100 having the ratio H1/M of the first distance H1 to the weight M of a single battery cell 2 within an appropriate range has a good performance, illustratively, a collision test is performed on the battery 100 by a collision test device A. As shown in FIG. 6, the collision test device A includes an impact head A1, a launching device A2 and a rack A3. During the test, the battery 100 is placed on the rack A3, such that the impact head A1 is driven by the launching device A2, and impacts on the battery 100 at a certain speed. Test conditions may be selected as follows: an impact direction is the height direction Z, an impact position is a weak point of the battery 100, and an impact energy is 90J.

Since the battery 100 is applied to a power consuming device such as a vehicle 1000, the top 101 is mounted to the vehicle 1000, and the bottom 102 of the battery 100 is impacted in the height direction Z, so that the scene after the battery 100 is mounted to the vehicle 1000 can be simulated. The weak point of the battery 100 indicates a vulnerable position of the battery 100, which is usually within a radius of 240 mm from the geometric center of the battery 100, and impacting the weak point of the battery 100 which can simulate the state of the battery 100 after the position of the battery 100 that has a weak structural strength is impacted. The impact energy of 90J can be equivalent to the impact head A1 impacting the battery 100 at a speed of 4.2 m/s. It can be understood that another impact energy can also be used to impact the battery 100, for example, 120J (at an impact speed 4.9 m/s) or 150J (at an impact speed 5.5 m/s). During the actual experiment, the battery 100 may be impacted multiple times with one impact energy, or the battery 100 may be impacted multiple times with multiple impact energies.

After the battery 100 is impacted by the collision test device A, it is observed at the ambient temperature for 2 hours to detect whether the battery 100 catches fire or explodes. Optionally, after the battery 100 is subjected to a collision test with the collision test device A, the battery 100 may also be tested for the enclosure protection level, which will not be limited in the embodiments of the present application.

Table 1 shows the test results of the collision test on the battery 100 by using the above method when the first distance H1, the weight M of a single battery cell 2 and the value of H1/M are respectively different.

**Table 1**

| | H1 (mm) | M (Kg) | H1/M (mm/Kg) | Collision test |
|---|---|---|---|---|
| Example 1 | 5 | 10 | 0.5 | No fire, no explosion |
| Example 2 | 10 | 5 | 2 | No fire, no explosion |
| Example 3 | 15 | 3 | 5 | No fire, no explosion |
| Example 4 | 20 | 2 | 10 | No fire, no explosion |
| Example 5 | 25 | 1 | 25 | No fire, no explosion |
| Comparative Example 1 | 2 | 10 | 0.2 | Fire, explosion |
| Comparative Example 2 | 30 | 1 | 30 | Fire, explosion |
| Comparative Example 3 | 25 | 0.5 | 50 | Fire, explosion |

As shown in Table 1, when it is satisfied that 2 mm < H1 < 30 mm, and H1/M satisfies 0.2 mm/Kg < H1/M < 50 mm/Kg, the battery 100 will not catch fire or explode in a collision test of a certain intensity, and thus has a better safety.

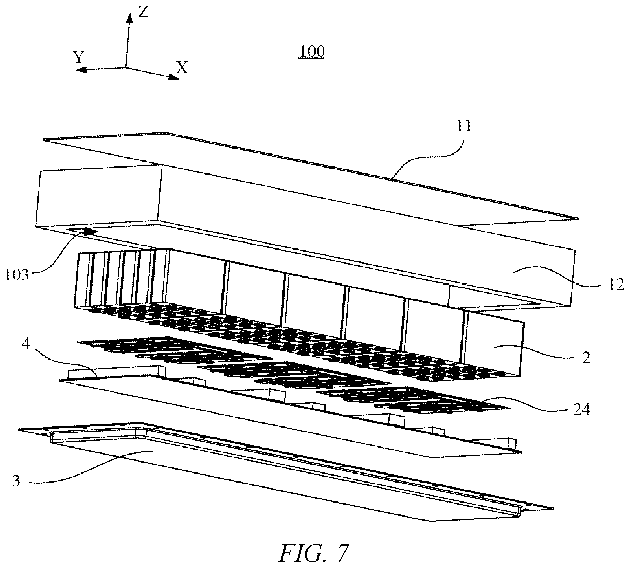

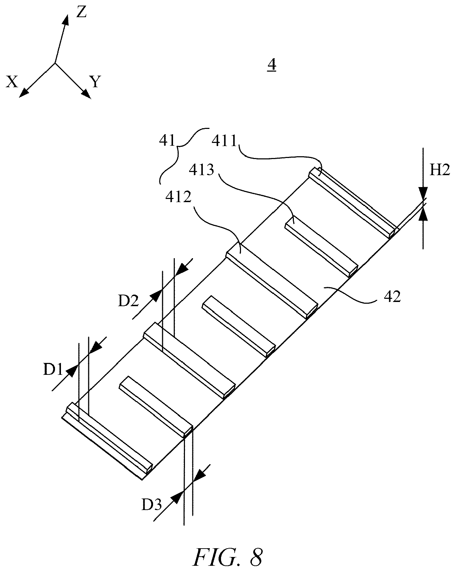

FIG. 7 is a schematic exploded view of a battery 100 according to some other embodiments of the present application. FIG. 8 is a schematic structural view of a protective assembly 4 of a battery 100 according to some other embodiments of the present application. As shown in FIGS. 7 and 8, in some embodiments of the present application, the battery 100 further includes a protective assembly 4. The protective assembly 4 is arranged between the battery cell 2 and the cover body 3 to protect the pressure relief mechanism 212 and the electrode terminals 211.

The protective assembly 4 is arranged between the battery cell 2 and the cover body 3, that is, between the pressure relief mechanism 212 and the electrode terminals 211 and the cover body 3, and is configured to support the battery cell 2 and the cover body 3, so as to provide protection for the pressure relief mechanism 212 and the electrode terminals 211, and play a protective role during collision.

In some embodiments of the present application, the protective assembly 4 includes a plurality of protective members 41 distributed at intervals in a length direction of the case 1, a plurality of battery cells 2 are provided, and the pressure relief mechanism 212 and the electrode terminals 211 of each of the battery cells 2 are located between two adjacent protective members 41.

For ease of description, in some embodiments of the present application, the length direction of the case 1 is taken as the X direction, that is, one of the horizontal directions. The length direction X and the height direction Z are perpendicular to each other. When the included angle between the length direction X and the height direction Z is an angle between 85, the length direction X and the height direction Z can be considered as perpendicular to each other. It should be understood that the length direction X may also be another direction, and the length direction X may not be perpendicular to the height direction Z, which will not be described in detail in the present application.

In the battery 100, a plurality of battery cells 2 may be provided, and the plurality of battery cells 2 may be connected in series or in parallel or in series-parallel. The series-parallel connection means that some of the plurality of battery cells 2 are connected in series and some are connected in parallel. The plurality of battery cells 2 may be directly connected to each other in series or in parallel or in series-parallel, and then the plurality of battery cells 2 as a whole are received in the case 1. Of course, the battery 100 may also be received in the case 1 as a whole that is formed by firstly connecting a plurality of battery cells 2 in series or in parallel or in series-parallel to form a plurality of battery 100 modules, and then connecting the plurality of battery 100 modules in series or in parallel or in series-parallel. Therefore, the battery cells 2 may be distributed in an array in the battery 100.

The plurality of protective members 41 are distributed in the length direction X at intervals, that is, the protective assembly 4 is arranged in the length direction X between the plurality of battery cells 2 and the cover body 3. As an example, the protective members 41 may be formed in a strip shape, protruding from the cover body 3 in the height direction Z and fixed to the battery cells 2, so that the pressure relief mechanism 212 and the electrode terminals 211 of the battery 100 are located between two adjacent protective members 41, to protect the pressure relief mechanism 212 and the electrode terminals 211.

In some embodiments of the present application, the plurality of protective members 41 include edge protective members 411, first protective members 412 and second protective members 413, wherein in the length direction X, the edge protective members 411 are arranged at two side edges of an array in which the plurality of battery cells 2 are arranged, and the first protective members 412 and the second protective members 413 are alternately distributed between the two edge protective members 411.

The edge protective members 411 are laterally arranged at the two side edges of the array in which the plurality of battery cells 2 are arranged, that is, each is arranged at the edge of one of the outermost battery cells 2 in the array, so that when the battery cells 2 are close to the case 1, the edge protective members support the two battery cells 2. The first protective members 412 and the second protective members 413 are alternately distributed between the two edge protective members 411, so that the protective members 41 can be more adapted to the array distribution of the battery cells 2, so as to better support the battery cells 2.

In some embodiments of the present application, in a width direction of the case 1, the first protective members 412 have an extension length greater than that of the second protective members 413.

For ease of description, in the embodiments of the present application, the width direction of the case 1 is taken as the Y direction, that is, the other horizontal direction. The length direction X, the height direction Z and the width direction Y are perpendicular to one another. When the included angle between the length direction X, the height direction Z and the width direction Y is an angle between 85, the three can be considered as perpendicular to one another. It should be understood that the width direction Y may also be another direction, and the width direction Y may not be perpendicular to the length direction X and the height direction Z, which will not be described in detail in the embodiments of the present application.

Referring to FIG. 3 again, in some optional embodiments, the plurality of battery cells 2 are electrically connected to each other via a bus component 24. The bus component 24 bridges the electrode terminals 211 of adjacent battery cells 2 to connect the plurality of battery cells 2 in series, in parallel or in series-parallel. Since in some embodiments of the present application, the bus component 24 bridges the electrode terminals 211 of adjacent battery cells 2 in the length direction X, at least some of the protective members 41 need to avoid the bus component. Therefore, in the width direction Y, the extension length of the first protective members 412 is greater than that of the second protective members 413, so that the second protective members 413 avoid the bus component 24.

The lengths of the first protective members 412 and the second protective members 413 in the width direction Y are not equal, so that the protective members can avoid the bus component 24, and the protective assembly 4 is thus better adapted to the structure of the battery 100, facilitating the series, parallel or series-parallel connection of the battery cells 2.

Optionally, when the bus component 24 bridges the electrode terminals 211 in other directions, the first protective members 412 and the second protective members 413 may be changed in size according to the specific conditions.

Optionally, the extension length of the protective member 41 may only indicate the total length of the protective member 41 in the width direction Y, so that the total length of the second protective member 413 is less than that of the first protective member 412, that is, the second protective member 413 can avoid the bus component 24 at any position, which may be at one end of the second protective member 413, or in the middle of the second protective member 413, depending on the arrangement of the bus component 24. The embodiments of the present application do not specially limit the power consuming devices described above.

In some embodiments of the present application, in the length direction X, the first protective members 412 and the second protective members 413 each have a width greater than that of the edge protective members 411.

Since the edge protective members 411 are arranged at the edges of the array of battery cells 2, the edge protective members 411 do not need to simultaneously support adjacent battery cells 2 in the length direction X like the first protective members 412 or the second protective members 413, but only need to support a column of battery cells 2, the width of the edge protective members 411 can be less than those of the first protective members 412 and the second protective members 413, which can provide a good support effect.

Optionally, the width of the first protective members 412 in the length direction X may be less than that of the second protective members 413. In this case, the widths of the second protective member 413, the first protective member 412 and the edge protective member 411 decrease gradually in the length direction X.

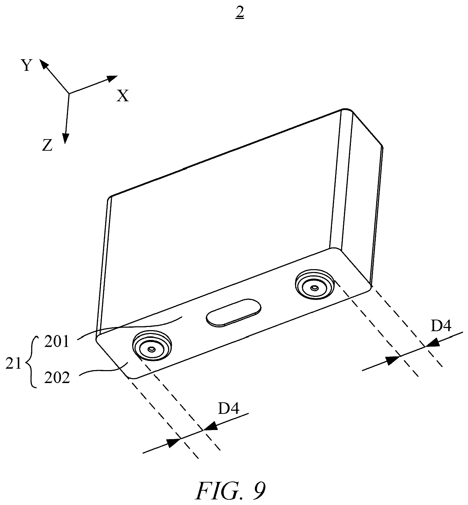

FIG. 9 is a schematic structural view of a battery cell 2 of a battery 100 according to some embodiments of the present application. As shown in Figure 9, in some embodiments of the present application, the end cap 21 includes a functional area 201 and shoulders 202, wherein in the length direction X, the shoulders 202 are located on two sides of the functional area 201, the functional area 201 is provided with the pressure relief mechanism 212 and the electrode terminals 211, and the protective members 41 are fixedly connected to the shoulders 202.

The functional area 201 indicates that the end cap 21 is provided with an area that enables the battery cell 2 to realize its own function, or an area that enables the battery cell 2 to interact with the outside. Since the functional area 201 is often provided with electrical connection components or other functional components, the functional area 201 should not be subjected to stress during the use of the battery 100. The shoulder 202 indicates the area of the end cap 21 that can be subjected to stress except the functional area 201. Optionally, in the functional area 201, the electrode terminals 211 may be arranged on two sides of the pressure relief mechanism 212 to reduce the influence of the pressure relief mechanism 212 on the electrode terminals 211 during pressure relief.

Arranging the functional area 201 between the shoulders 202 can make the shoulders 202 achieve a certain protective effect on the functional area 201. The battery cell 2 is fixed to the protective members 41 by means of the shoulders 202, so that the battery 100 can have a more compact structure, preventing damage to the functional area 201 due to stress, and prolonging the service life of the battery cell 2.

In some embodiments of the present application, in the length direction X, a width D1 of the edge protective members 411, a width D2 of the first protective members 412, a width D3 of the second protective members 413, and a width D4 of the shoulders 202 satisfy: 0.2D4 ≤ D1 ≤ D4, 0.5D4 ≤ D2 ≤ 2D4, and 0.5D4 ≤ D3 ≤ 2D4.

Since the edge protective member 411 is arranged at the edge of the array of the battery 100, the edge protective member 411 is only in contact with the shoulder 202 of one side of the edge battery cell 2 in the length direction X, so that the width D1 of the edge protective member 411 being less than or equal to the width D4 of the shoulder 202 can prevent the edge protective member 411 from contacting the functional area 201 and affecting the function of the battery cell 2. The width D1 of the edge protective member 411 is greater than or equal to 0.2 times the width D4 of the shoulder 202, such that the edge protective member 411 can provide sufficient supporting force for the battery cell 2.

Since the first protective member 412 is arranged between adjacent battery cells 2, the width D2 of the first protective member 412 is greater than or equal to 0.5 times the extension width D4 of the shoulder 202, such that sufficient supporting force can be provided for the battery cell 2. Preferably, when the width D2 of the first protective member 412 is greater than or equal to the extension width D4 of the shoulder 202, the first protective member 412 can carry two adjacent battery cells 2 at the same time, without the problem of poor structural stability of the battery 100 due to uneven stress when only one of the two adjacent battery cells can be carried due to offset. In addition, the width D2 of the first protective member 412 is less than or equal to 2 times the width D4 of the shoulder 202, so that when carrying two adjacent battery cells 2 at the same time, the first protective member 412 is only in contact with the shoulders 202 of two adjacent battery cells 2, so as to avoid contact with the functional area 201 to affect the function of the battery cells 2.

Similar to the first protective member 412, the width D3 of the second protective member 413 may be greater than or equal to 0.5 times the extension width D4 of the shoulder 202 and less than or equal to 2 times the width D4 of the shoulder 202.

In some embodiments of the present application, in the height direction Z, the protective members have an extension height greater than that of the electrode terminals 211.

In the height direction Z of the case 1, the extension height of the protective members 41 is greater than that of the electrode terminals 211, so that the electrode terminals 211 can be suspended between adjacent protective members 41, avoiding contact with other components to affect the function.

In some embodiments of the present application, the battery 100 further includes an insulating plate body 42. The insulating plate body 42 is arranged between the protective assembly 4 and the cover body 3 to absorb and disperse external impact forces in the horizontal directions.

By providing the insulating plate body 42, a plurality of protective members 41 in the protective assembly 4 may be combined as a whole. Moreover, providing the insulating plate body 42 that extends in the length direction X can also disperse the stress of the protective assembly 4 to increase the structural strength of the battery 100.

Optionally, in order to avoid affecting the electrical connection between the battery cells 2, the insulating plate body 42 and the protective assembly 4 may be both insulating members. It can be understood that, the insulating member means that the insulating plate body 42 and the protective assembly 4 each may be made of an insulating material, or may be an object whose surface is coated with an insulating material so as to exhibit insulation properties as a whole. When the insulating plate body 42 and the protective assembly 4 each are an object whose surface is covered with an insulating material, a core material may be a metal material, an insulating material, a composite material, etc., and an outer surface of the core material is covered with the insulating material.

Optionally, the protective assembly 4 may be integrally formed with the insulating plate body 42, so as to facilitate the manufacture of the protective assembly 4. The protective assembly 4 and the insulating plate body 42 may also be detachably connected to each other, to facilitate the adjustment of the position of the protective assembly 4 according to the arrangement of the battery cell 2, so that the protective assembly 4 has a wider range of use scenarios.

In some embodiments of the present application, the insulating plate body 42 is fixedly connected to the cover body 3.

The insulating plate body 42 may be fixedly connected to the cover body 3, to increase the structural firmness of the battery 100. Optionally, the insulating plate body 42 may abut against the cover body 3, which will not be limited in the embodiments of the present application.

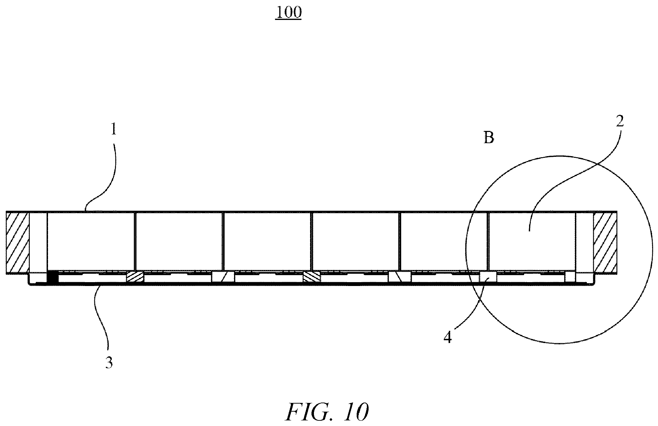

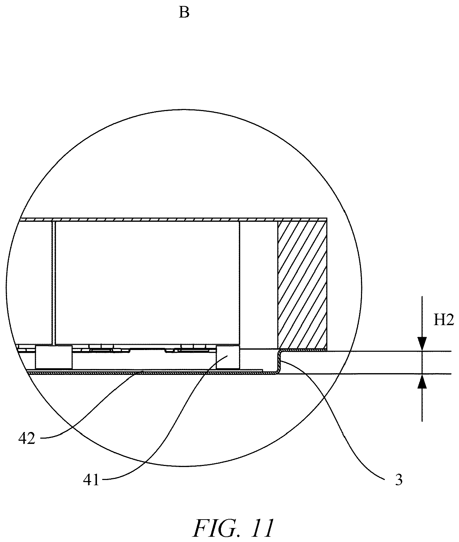

FIG. 10 is a schematic cross-sectional view of the battery 100 shown in FIG. 7. FIG. 11 is a schematic enlarged view of FIG. 10 at circle B. As shown in FIGS. 10 and 11, in an optional implementation, in the height direction Z of the case 1, the extension height of the protective assembly 4 is a second distance H2, the second distance H2 satisfying 0.5 mm ≤ H2 ≤ 30 mm.

The protective assembly 4 has a certain size in the height direction Z, so that it can protrude from the insulating plate body 42 to support and carry the battery cell 2. The protective assembly 4 maintains the second distance H2, so that it is possible for the end cap 21 of the battery cell 2 to be kept at a certain distance from the cover body 3, so as to keep the energy density of the battery 100 moderate.

The ratio H2/M of the second distance H2 to the weight M of a single battery cell 2 can indicate the energy density and the structural strength of the battery 100. When the ratio of the second distance H2 to the weight M of a single battery cell 2 is too large, the energy density of the battery 100 will be too low accordingly.When the ratio of the second distance H2 to the weight M of a single battery cell 2 is too small, the structural strength of the battery 100 will be insufficient accordingly, and a safety accident may occur in a collision. Therefore, the ratio H2/M of the second distance H2 to the weight M of a single battery cell 2 satisfies 0.05 mm/Kg ≤ H2/M ≤ 50 mm/Kg. Within this value range, the battery 100 has a good energy density and an appropriate structural strength.

To verify that a battery 100 having the ratio H2/M of the second distance H2 to the weight M of a single battery cell 2 within an appropriate range has a good performance, a structural strength test may performed on the battery 100. During the structural strength test of the battery 100, illustratively, the structural strength of the battery 100 may be determined through a plurality of tests such as a shear strength test and a compressive strength test.

In the shear strength test, illustratively, the battery 100 may be fixed between clamps of a shear tester, then a detection head of the shear tester is used to drive the battery 100 to move in the length direction X or in the width direction Y at a speed of 5 mm/min, and a pulling force F exerted by the detection head is recorded when the case 1 is damaged. Taking a projection area of the battery 100 in the height direction Z as an area A, the value of F/A is the shear strength that the battery 100 can withstand.

In the compressive strength test, illustratively, a pressing head may be used to apply pressure to the battery 100 in the height direction Z and in the length direction X or in the width direction Y, advances toward the battery 100 at a speed of 2 m/s, and is stopped for 10 minutes after a pressing force reaches 50 KN or the deformation of the battery 100 reaches 30%, and the battery 100 is left standing and observed at the ambient temperature for 2 hours after the compressive strength test.

Optionally, the structural strength of the battery 100 may be tested through other structural strength tests, which will not be limited in the embodiments of the present application.

Table 2 shows the test results of the structural strength of the battery 100 by using the above method when the second distance H2, the weight M of a single battery cell 2 and the value of H2/M are respectively different.

**Table 2**

| | H2 (mm) | M (Kg) | H2/M (mm/Kg) | Structural strength test |
|---|---|---|---|---|
| Example 6 | 0.5 | 10 | 0.05 | Fair |
| Example 7 | 5 | 5 | 1 | Fair |
| Example 8 | 10 | 4 | 2.5 | Good |
| Example 9 | 10 | 2 | 5 | Good |
| Example 10 | 20 | 1 | 20 | Excellent |
| Example 11 | 30 | 0.6 | 50 | Fair |
| Comparative Example 4 | 0.2 | 5 | 0.04 | Poor |
| Comparative Example 5 | 52 | 1 | 52 | Poor |

As shown in Table 2, when H2 satisfies 0.5 mm ≤ H2 ≤ 30 mm, and H2/M satisfies 0.05 mm/Kg ≤ H2/M ≤ 50 mm/Kg, the battery 100 has a better structural strength in the structural strength test.

It should be understood that the above descriptions of some embodiments of the battery 100 are only illustrative, and the battery 100 may also have other structures.

In some optional embodiments, the case 1 may be a simple three-dimensional structure such as a cuboid or a cylinder, or a complex three-dimensional structure composed of simple three-dimensional structures such as a cuboid or a cylinder. The material of the case 1 may be an alloy material such as an aluminum alloy and an iron alloy, or may be a polymer material such as polycarbonate and polyisocyanurate foam, or may be a composite material such as a combination of glass fiber and epoxy resin. In order to improve the sealing performance of the case 1, a sealing member, such as a sealant and a sealing ring, may also be provided between the cover body 3 and the side plates 12. The above feasible configurations are not limited in the embodiments of the present application.

Each battery cell 2 may be a secondary battery or a primary battery; may also be a lithium-sulfur battery, a sodium-ion battery, or a magnesium-ion battery, but is not limited thereto. The battery cell 2 may be in the shape of a cylinder, a flat body, a cuboid, etc.

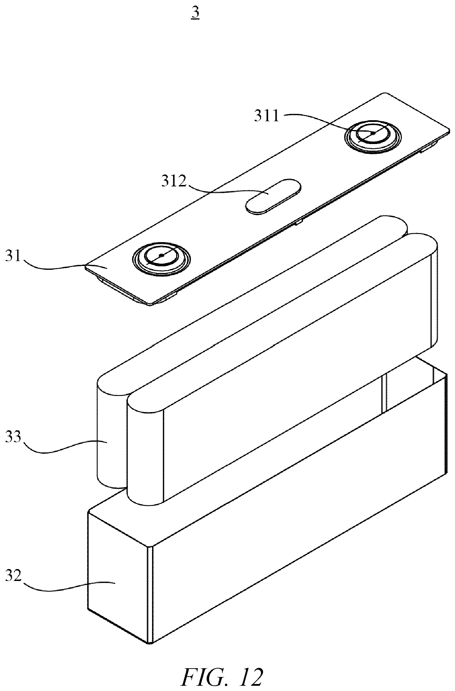

FIG. 12 is a schematic structural view of the interior of a battery cell according to some embodiments of the present application. The battery cell 2 refers to the smallest unit of the battery 100. As shown in FIG. 12, the battery cell 2 further includes an end cap 21, a housing 22, an electrode assembly 23 and other functional components.

The end cap 21 refers to a component that covers an opening of the housing 22 to isolate the internal environment of the battery cell 2 from the external environment. Without limitation, the shape of the end cap 21 may be adapted to the shape of the housing 22 to match the housing 22. Optionally, the end cap 21 may be made of a material (for example, an aluminum alloy) with a certain hardness and strength. In this way, the end cap 21 is less prone to deformation when subjected to compression and collision, so that the battery cell 2 may have a higher structural strength and the safety performance can also be improved. The end cap 21 is provided with functional components such as electrode terminals 211 and an explosion-proof valve. The electrode terminals 211 may be used for electrical connection with the electrode assembly 23 for outputting or inputting electric energy of the battery cell 2. In some embodiments, the end cap 21 may also be provided with a pressure relief mechanism 212 for releasing the internal pressure when the internal pressure or temperature of the battery cell 2 reaches a threshold value. The end cap 21 may also be made of various materials, such as copper, iron, aluminum, stainless steel, an aluminum alloy, plastic, etc., which will not be specially limited in the embodiments of the present application. In some embodiments, an insulating member may also be provided on an inner side of the end cap 21, and the insulating member may be used to isolate an electrical connection plate in the housing 22 from the end cap 21 to reduce the risk of short circuit. Illustratively, the insulating member may be made of plastic, rubber, etc.

The housing 22 is an assembly for matching the end cap 21 to form the internal environment of the battery cell 2. The formed internal environment may be used to receive the electrode assembly 23, an electrolyte solution (not shown in the figures) and other components. The housing 22 and the end cap 21 may be separate components, the housing 22 may be provided with an opening, and the internal environment of the battery cell 2 is formed by making the end cap 21 cover the opening at the opening. Without limitation, the end cap 21 and the housing 22 may also be integrated with each other. Specifically, the end cap 21 and the housing 22 may form a common connection face before other components are inserted into the housing. When the interior of the housing 22 needs to be packaged, the end cap 21 then covers the housing 22. The housing 22 may have various shapes and various sizes, for example, in the form of a cuboid, a cylinder, a hexagonal prism, etc. Specifically, the shape of the housing 22 may be determined depending on the specific shape and size of the electrode assembly 23. The housing 22 may be made of various materials, such as copper, iron, aluminum, stainless steel, an aluminum alloy, plastic, etc., which will not be specially limited in the embodiments of the present application.

The electrode assembly 23 is a component where an electrochemical reaction occurs in the battery cell 2. The housing 22 may include one or more electrode assemblies 23 therein. The electrode assembly 23 is mainly formed by winding or stacking a positive electrode plate and a negative electrode plate, and a separator is generally arranged between the positive electrode plate and the negative electrode plate. The portions of the positive electrode plate and the negative electrode plate that have an active material form a main body portion of the electrode assembly 23, and the portions of the positive electrode plate and the negative electrode plate that have no active material each form a tab. A positive battery tab and a negative battery tab may be jointly located at one end of the main body portion together or at two ends of the main body portion, respectively. During the charging and discharging of the battery 100, a positive active material and a negative active material react with the electrolyte solution, and the tabs are connected to the electrode terminals 211 to form a current loop.

In some optional embodiments of the present application, the battery 100 includes a case 1 and a battery cell 2, the case 1 has a top 101 and a bottom 102 opposite to each other in the height direction Z, an opening 103 of the case 1 is provided at the bottom 102, the battery cell 2 is arranged upside down in the case 1 with an end cap 21 facing the bottom 102, the end cap 21 is provided with electrode terminals 211 and a pressure relief mechanism 212, and the electrode terminals 211 and the pressure relief mechanism 212 face the bottom 102. The case 1 further includes a cover body 3 arranged at the opening 103. There is a first distance H1 between the end cap 21 of the battery cell 2 and the cover body 3, the first distance H1 satisfying 2 mm < H1 < 30 mm. A ratio H1/M of the first distance H1 to the weight M of a single battery cell 2 satisfies 0.2 mm/Kg < H1/M < 50 mm/Kg. As shown in Table 1, the battery 100 will not catch fire and explode in a collision test of a certain intensity, and has a better safety.

In some cases, in the battery 100 according to the embodiments of the present application, the end cap 21 of the battery cell 2 faces the bottom 102 and is arranged upside down in the case 1, so that the rigidity of the top of the battery 100 can be enhanced; and the electrode terminals 211 and the pressure relief mechanism 212 are jointly arranged to face the bottom 102, so that the safety of the battery 100 can be improved.

It should be noted that the embodiments in the present application and features in the embodiments may be combined with each other without conflicts.

Finally, it should be noted that the foregoing embodiments are merely used for illustrating rather than limiting the technical solutions of the present application. Although the present application has been illustrated in detail with reference to the foregoing embodiments, it should be understood by those of ordinary skill in the art that the technical solutions described in the foregoing embodiments may still be modified, or some of the technical features therein may be equivalently substituted, but these modifications or substitutions do not make the essence of corresponding technical solutions depart from the spirit and scope of the technical solutions of the embodiments of the present application.

## Claims

1. A battery, comprising:
a case (1), having a top (101) and a bottom (102) opposite to each other in a height direction of the case (1), the bottom (102) being provided with an opening (103); and
a battery cell (2), wherein the battery cell (2) is arranged upside down in the case (1) with an end cap (21) facing the bottom (102), the end cap (21) is provided with a pressure relief mechanism (212) and electrode terminals (211), and the pressure relief mechanism (212) and the electrode terminals (211) are both arranged to face the bottom (102).

2. The battery according to claim 1, wherein the case (1) comprises a support plate (11) and side plates (12), the support plate (11) is arranged at the top (101), and the battery is fixedly connected to the support plate (11).

3. The battery according to claim 2, wherein the case (1) further comprises a cover body (3) arranged at the opening (103), the side plates (12) are connected to each other to form a frame structure, and the cover body (3) is fixedly connected to the side plates (12).

4. The battery according to claim 3, wherein in the height direction, there is a first distance H1 between the end cap (21) of the battery cell (2) and the cover body (3), the first distance H1 satisfying 2 mm < H1 < 30 mm.

5. The battery according to claim 4, wherein a ratio H1/M of the first distance H1 to the weight M of a single battery cell (2) satisfies 0.2 mm/Kg < H1/M < 50 mm/Kg.

6. The battery according to claim 3, further comprising a protective assembly (4), wherein the protective assembly (4) is arranged between the battery cell (2) and the cover body (3) to protect the pressure relief mechanism (212) and the electrode terminals (211).

7. The battery according to claim 6, wherein the protective assembly (4) comprises a plurality of protective members (41) distributed at intervals in a length direction of the case (1), a plurality of battery cells (2) are provided, and the pressure relief mechanism (212) and the electrode terminals (211) of each of the battery cells (2) are located between two adjacent protective members (41).

8. The battery according to claim 7, wherein the plurality of protective members (41) comprise edge protective members (411), first protective members (412) and second protective members (413), wherein in the length direction, the edge protective members (411) are arranged at two side edges of an array in which the plurality of battery cells (2) are arranged, and the first protective members (412) and the second protective members (413) are alternately distributed between the two edge protective members (411).

9. The battery according to claim 8, wherein in a width direction of the case (1), the first protective members (412) have an extension length greater than that of the second protective members (413).

10. The battery according to claim 8, wherein in the length direction, the first protective members (412) and the second protective members (413) each have a width greater than that of the edge protective members (411).

11. The battery according to claim 8, wherein the end cap (21) comprises a functional area (201) and shoulders (202), wherein in the length direction, the shoulders (202) are located on two sides of the functional area (201), the functional area (201) is provided with the pressure relief mechanism (212) and the electrode terminals (211), and the protective members (41) are fixedly connected to the shoulders (202).

12. The battery according to claim 11, wherein in the length direction, a width D1 of the edge protective members (411), a width D2 of the first protective members (412), a width D3 of the second protective members (413), and a width D4 of the shoulders (202) satisfy: 0.2D4 ≤ D1 ≤ D4, 0.5D4 ≤ D2 ≤ 2D4, and 0.5D4 ≤ D3 ≤ 2D4.

13. The battery according to claim 7, wherein in the height direction, the protective members (41) have an extension height greater than that of the electrode terminals (211).

14. The battery according to any one of claims 6-13, further comprising an insulating plate body (42), wherein the insulating plate body (42) is arranged between the protective assembly (4) and the cover body (3).

15. The battery according to claim 14, wherein the insulating plate body (42) is fixedly connected to the cover body (3).

16. A power consuming device, comprising a battery according to any one of claims 1-15, the battery being configured to supply electric energy.
